(19) Europäisches Patentamt
European Patent Office
Office européen des brevets

(11) **EP 2 337 332 B1**

(12) **EUROPEAN PATENT SPECIFICATION**

(45) Date of publication and mention
of the grant of the patent:
**11.11.2015 Bulletin 2015/46**

(51) Int Cl.:
*H04N 1/00* *(2006.01)*      *H04N 1/203* *(2006.01)*
*H04N 1/387* *(2006.01)*

(21) Application number: **10194749.7**

(22) Date of filing: **13.12.2010**

(54) **Image reading device for correcting image read from original, method of controlling the image reading device, and storage medium**

Bildlesevorrichtung zur Korrektur der Bilderfassung ausgehend vom Original, Verfahren zur Ansteuerung der Bildlesevorrichtung und Speichermedium

Dispositif de lecture d'images permettant de corriger une image lue à partir de l'originale, procédé de commande du dispositif de lecture d'images et support de stockage

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.12.2009 JP 2009283974**

(43) Date of publication of application:
**22.06.2011 Bulletin 2011/25**

(73) Proprietor: **CANON KABUSHIKI KAISHA Ohta-ku Tokyo 146-8501 (JP)**

(72) Inventor: **Utsunomiya, Takehito Ohta-ku, Tokyo (JP)**

(74) Representative: **Williamson, Brian Canon Europe Ltd European Patent Department 3 Square, Stockley Park Uxbridge, Middlesex UB11 1ET (GB)**

(56) References cited:
JP-A- 2007 019 854      JP-A- 2008 294 559
JP-A- 2010 258 803      US-A- 4 734 742
US-A1- 2003 024 792

**Description**

BACKGROUND OF THE INVENTION

Field of the Invention

The present invention relates to an image reading device and a method of controlling the same, and more particularly to a technique of correcting for the skew in an original in a case where the front and back sides of the original are read simultaneously.

Description of the Related Art

Recently, image reading devices for use in digital copying machines, flatbed scanners, and the like has been provided with a function for simultaneously reading the front and back sides of an original during a single conveyance of the original.

In general, in an image reading device of the above-mentioned type, the front and back sides of an original are read by a front-side sensor and a back-side sensor, respectively. For this reason, when the original is skewed, an image read from the front side and an image read from the back side are produced in a state rotated from each other by an angle twice the skew angle of the original. Therefore, a skew correction technique plays a particularly important role in simultaneously reading the two sides of the original.

Conventionally, a skew correction technique is generally employed in which a skew of an original is corrected by bringing the leading edge of the original into abutment with a registration roller and thereby warping the original, during conveyance of the original to a reading position.

However, such a skew correction technique, which is based on the mechanical construction of the image reading device is an impediment to increasing the speed of reading originals. To solve this problem, there has been proposed a technique in which when an original is in a skewed state, the original is read as it is, the skew angle of the original is detected and skew correction is performed according to the detected skew angle of the original, using a CPU and a dedicated skew correction circuit, etc. (see Japanese Patent Laid-Open Publication No. 2004-254166).

The image reading device disclosed in Japanese Patent Laid-Open Publication No. 2004-254166, however, is required to be provided with the skew correction circuit comprising a circuit for correcting an image read from the front side of an original and a circuit for correcting an image read from the back side of the same. This causes an increase in the total circuit size, which leads to an increase in the manufacturing costs of the image reading device.

JP 2007 019854 discloses an image reading device as claimed in the pre-characterizing portion of claim 1.

SUMMARY OF THE INVENTION

The present invention provides an image reading device which corrects images read from respective first and second sides of an original without increasing the total circuit size.

In a first aspect of the present invention, there is provided an image reading device as specified in claims 1 to 6.

In a second aspect of the present invention, there is provided a method of controlling an image reading device as specified in claim 7.

In a third aspect of the present invention, there is provided a computer-executable program for causing a computer to execute a method of controlling an image reading device as specified in claim 8.

According to the present invention, it is possible to correct images read from respective first and second sides of an original without increasing the total circuit size.

The features and advantages of the invention will become more apparent from the following detailed description taken in conjunction with the accompanying drawings.

BRIEF DESCRIPTION OF THE DRAWINGS

FIG. 1 illustrates an image processing apparatus which uses a device for reading both sides of an original, hereinafter referred to as a "both-side simultaneous reading device" according to an embodiment of the present invention.

FIG. 2 is a schematic cross-sectional view of a conveying system of the both-side simultaneous reading device.

FIG. 3 is a schematic cross-sectional view of a front-side reading section of the both-side simultaneous reading device.

FIG. 4 is a schematic cross-sectional view of a back-side reading section of the both-side simultaneous reading device.

FIG. 5 is a schematic block diagram of a control system of the image processing apparatus.

FIG. 6 is a view of a skewed state of an original with respect to an optical conversion element.

FIG. 7 is a view useful in explaining a skew angle of an original with respect to the optical conversion element.

FIG. 8 is a flowchart of a process for calculating a skew angle of an original.

FIG. 9 is a flowchart of a process for front-side skew correction for an original.

FIG. 10 is a diagram illustrating how front-side image data of an original is transferred from the image reading section to a RAM.

FIG. 11 is a diagram illustrating how skew of the front-side image data of the original is corrected using an image processing unit.

FIG. 12 is a diagram useful in explaining affine transformation.

FIG. 13 is a schematic block diagram of an interface controller for back-side reading.

FIG. 14 is a view useful in explaining various constants concerning an original.

FIG. 15 is a diagram useful in explaining how image data is stored in the RAM when an original is not skewed.

FIG. 16 is a diagram useful in explaining how image data is stored in the RAM when an original is skewed.

FIG. 17 is a diagram useful in explaining how image data stored in addresses of the RAM in a skewed state is moved to proper storage addresses.

FIG. 18 is a diagram illustrating how back-side image data of the original is transferred from the image reading section to the RAM.

FIG. 19A is a flowchart of an address generation process for back-side skew correction.

FIG. 19B is a continuation of FIG. 19A.

DESCRIPTION OF THE EMBODIMENTS

The present invention will now be described in detail below with reference to the accompanying drawings showing an embodiment thereof.

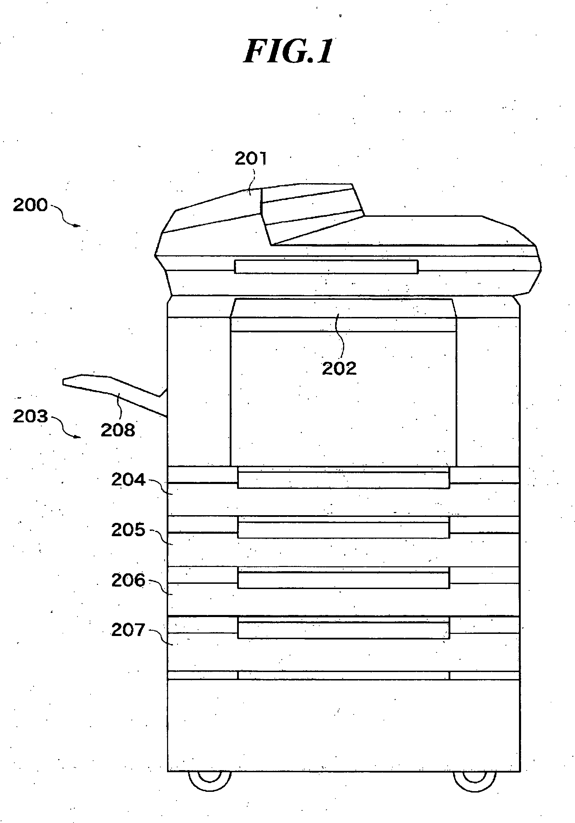

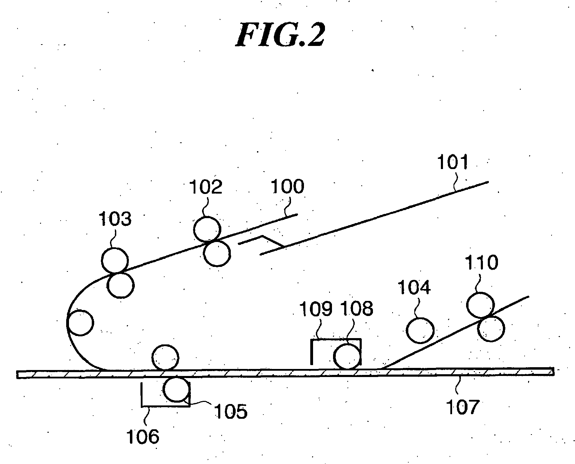

FIG. 1 illustrates an image processing apparatus which uses a both-side simultaneous reading device according to an embodiment of the present invention. As shown in FIG. 1, the image processing apparatus comprises a scanner unit 200, and a printer unit 203. The image processing apparatus is capable of reading an original image by the scanner unit 200 and printing the read original image by the printer unit 203. The scanner unit 200 has an automatic document feeder 201 configured to automatically feed originals to be read to a reading position (original platen glass 107: see FIG. 2, etc.). The printer unit 203 has sheet cassettes 204 to 207 each of which contains and feeds recording sheets of an associated size for use in recording original images, and a discharge tray 208 for stacking printed recording sheets thereon.

When a read command is issued via a console section 202, the automatic document feeder 201 is capable of sequentially feeding a plurality of originals one by one to the reading position. In this case, the automatic document feeder 201 feeds the originals while separating one original from the others e.g. by a separation roller.

The scanner unit 200 optically reads an image on an original fed to the reading position by the automatic document feeder 201 to photoelectrically convert the read image to electronic image data, and then transfers the electronic image data to the printer unit 203.

The scanner unit (image reading device) 200 has a "both-surface simultaneous reading function" for substantially simultaneously reading images on the respective front and back sides of the original during a single conveyance of the original to the reading position. Therefore, in the following description, the scanner unit (image reading device) 200 will be referred to as a both-side simultaneous reading device 200.

The printer unit 203 prints an image on a recording sheet based on the image data transferred thereto. The printer unit 203 can employ any of various printing methods, such as the electrophotographic printing method and the inkjet printing method. After printing the image on the recording sheet, the printer unit 203 discharges the recording sheet onto the discharge tray 208.

FIG. 2 is a schematic cross-sectional view of a conveying system of the both-side simultaneous reading device 200. In FIG. 2, originals to be read are placed on a document tray 101 in a stacked manner with their front sides facing upward. The originals 100 placed on the document tray 101 are picked up one by one by a pickup roller 102, fed onto the original platen glass 107 via a feed roller 103, and discharged via a conveying roller 104 and a discharge roller 110.

In this case, images on the both sides of each original 100 are read substantially simultaneously during the passage of the original 100 over the original platen glass 107. More specifically, while the original 100 is passing through a position opposed to a front-side reading section 106, the front surface of the original 100 is irradiated with light by a light source 105 of the front-side reading section 106, whereby the image on the front surface of the original 100 is read by the front-side reading section 106. Further, while the original 100 is passing through a position opposed to a back-side reading section 109, the back side of the original 100 is irradiated with light by a light source 108 of the back-side reading section 109, whereby the image on the back side of the original 100 is read by the back-side reading section 109.

In other words, the images on the both sides of the original 100 are read substantially simultaneously in a single feeding operation of the original 100 onto the original platen glass 107, and hence it is not required to feed the same original 100 onto the original platen glass 107 a plurality of times to read the images on the both sides of the original 100.

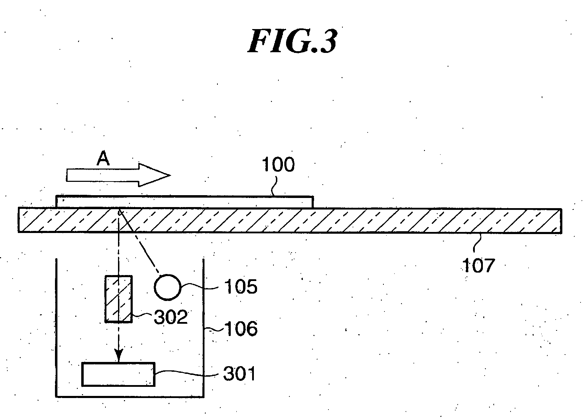

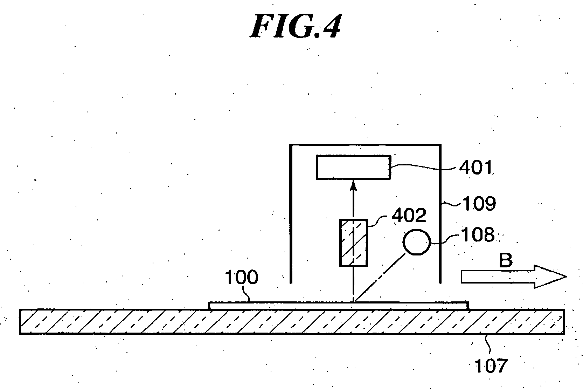

The front-side reading section 106 and the back-side reading section 109 are disposed at the respective lower and upper surfaces of the original platen glass 107. Therefore, images on the both sides of the original 100 are read by a so-called moving original reading method (see arrows in FIGS. 3 and 4).

The front-side reading section 106 and the back-side reading section 109 are configured similarly, and they respectively have the light sources 105 and 108, 100% magnification lenses 302 and 402, and line image sensors 301 and 401. It should be noted that the line image sensor 301 will also be referred to as the first reading section, the line image sensor 401 as the second reading section, and each of the line image sensors will also be referred to as the line sensor. The line image sensors 301 and 401 have a width equal to or larger than the width of the original 100 in the sub scanning direction.

In the moving original reading, the front and back sides of the original 100 are irradiated with light by the respective light sources 105 and 108. Reflected light from the front (back) surface of the original 100, i.e. image light reflecting a front-side (back-side) image enters the line image sensor 301 (401) via the 100% magnification lens 302 (402). The line image sensor 301 (401) photoelectrically converts the image light from the front (back) surface of the original 100 to electronic image data, and outputs the electronic image data.

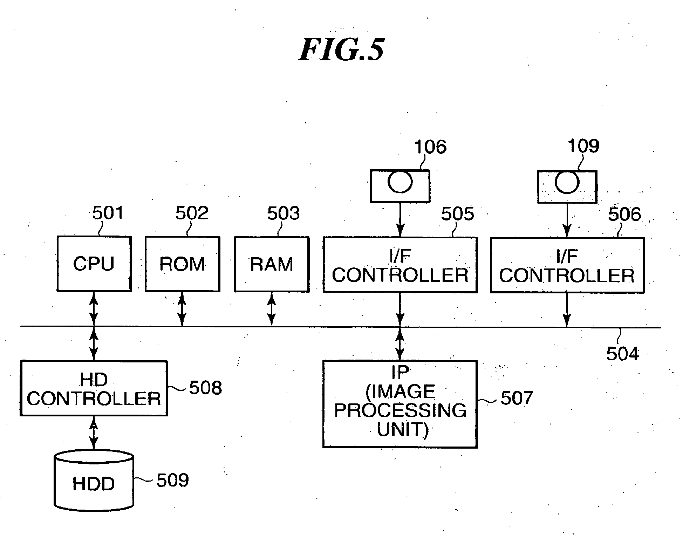

FIG. 5 is a schematic block diagram of the control system of the both-side simultaneous reading device 200. In FIG. 5, a CPU 501 executes an application program stored in a ROM 502 to thereby carry out a simultaneous reading process for reading images on the both sides of an original 100 simultaneously. At this time, the CPU 501 uses a RAM 503 as a work area etc.

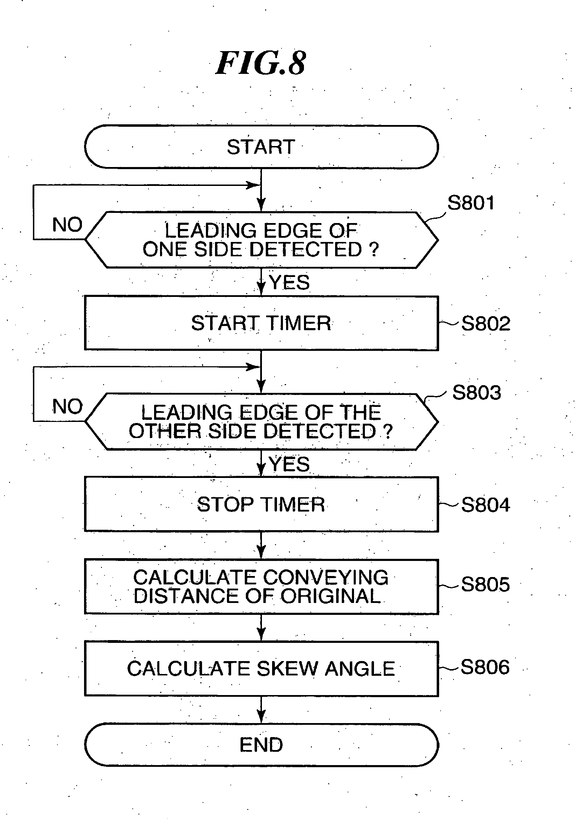

The ROM 502 also stores in advance application programs for causing the CPU 501, i.e. a computer to execute processes described hereinafter with reference to FIGS. 8, 9, and 19A and 19B. The RAM 503 is also used as an image memory (storage medium) for temporarily storing front-side and back-side image data read by the front-side reading section 106 and the back-side reading section 109, respectively.

The CPU 501, the ROM 502, and the RAM 503 are connected to a system bus 504. Further, the front-side and back-side reading sections 106 and 109 are connected to the system bus 504 via respective interface controllers 505 and 506. Furthermore, an image processing unit 507 is connected to the system bus 504, and a hard disk drive (HDD) 509 is also connected to the same via a hard disk (HD) controller 508.

During the passage of the original 100 before the locations of the respective reading sections 106 and 109, the front-side reading section 106 and the back-side reading section 109 irradiate the front and back-sides of the original 100 with light from the respective light sources 105 and 108 under the control of the CPU 501. Then, the front-side reading section 106 and the back-side reading section 109 photoelectrically convert image lights from the front and back-sides of the original 100 by the respective line image sensors 301 and 401.

Next, the front-side reading section 106 and the back-side reading section 109 converts image data (analog data) obtained by the photoelectrical conversion to digital image data and outputs the digital image data to the interface controllers 505 and 506, respectively. The interface controllers 505 and 506 each function as a storage control unit and store the image data from the respective front-side and back-side reading sections 106 and 109 in respective different areas in the RAM 503.

The image processing unit 507 performs various kinds of image correction, such as shading correction, on the image data that is read from the front and back sides of the original 100 and is stored in the RAM 503.

In the present embodiment, the skew angle (image inclination angle) of the original 100 is defined as an angle of skew of the original 100 with respect to the direction of arrangement of pixel arrays of the line image sensor 301.

The CPU 501 causes the HD controller 508 to store the image data subjected to image processing by the image processing unit 507, in the hard disk drive 509. It should be noted that the image processing unit 507 performs various kinds of image processing on image data stored in the hard disk drive 509 under the control of the CPU 501 and stores the processed image data in the hard disk drive 509 again.

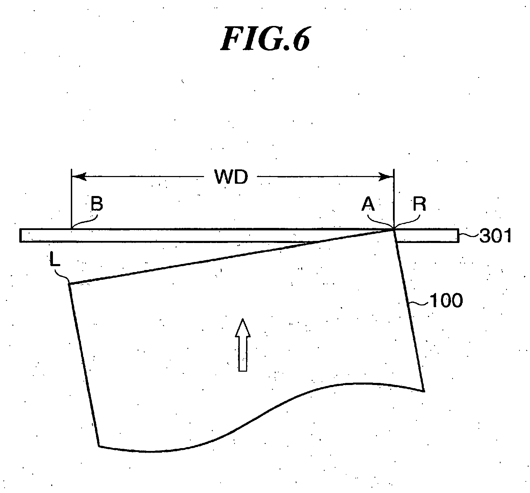

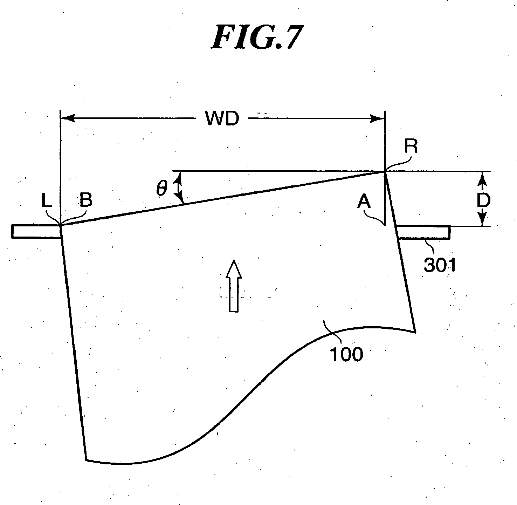

Next, a method of detecting the skew angle of an original will be described with reference to FIGS. 6 to 8. The skew angle of the original can be detected by either the front-side reading section 106 or the back-side reading section 109, but in the present embodiment, the front-side reading section 106, which performs original reading earlier than the back-side reading section 109, is used to detect the skew angle of the original so as to speed up the processing.

FIG. 8 is a flowchart of a process for calculating a skew angle of an original. The present process is executed by the CPU 501 by reading out an associated program from the hard disk drive (HDD) 509 and loading the same into RAM 503. When detecting that a leading edge of one side of the original 100 has passed the line image sensor 301 (S801), the CPU 501 starts a timer (not shown) to start counting up (S802). In this case, if the original 100 is in a skewed state as illustrated in FIG. 6, an upper right corner R of the original 100 is detected first in a pixel position corresponding to a point A of the line image sensor 301.

Thereafter, when an upper left corner L of the original 100 is detected in a pixel position corresponding to a point B of the line image sensor 301 (S803), the CPU 501 causes the timer to stop counting (S804). When the original 100 is in a skewed state, the distance between the point A and the point B in a direction orthogonal to an original conveying direction, i.e. a one-line reading width WD becomes shorter than the width (length) of the original 100 associated with the main scanning direction. The CPU 501 determines the distance between the point A and the point B in the direction orthogonal to the original conveying direction, i.e. the one-line reading width WD, based on image data read from the original 100.

Then, the CPU 501 multiplies the conveying speed of the original 100 by the count of the timer to thereby calculate a conveying distance D over which the original 100 was conveyed from the time point the upper right corner R of the original 100 corresponding to the point A was detected by the line image sensor 301 to the time point the upper left corner L corresponding to the point B was detected by the same (S805).

Next, the CPU 501 calculates a skew angle θ of the original 100 by the following equation 1, using the distance between the point A and the point B, i.e. the one-line reading width WD of the original 100 and the conveying distance D (S806):

$$\theta = \tan^{-1}D/WD$$

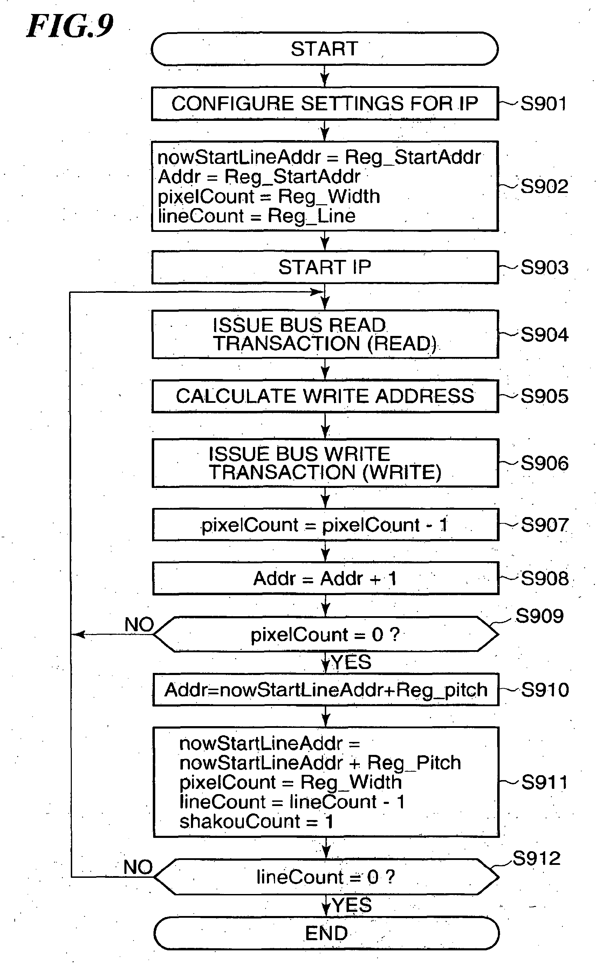

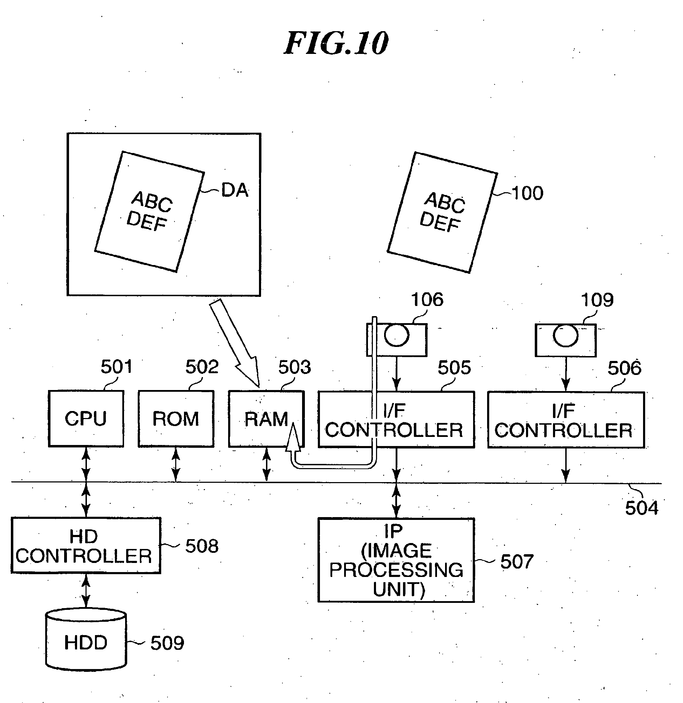

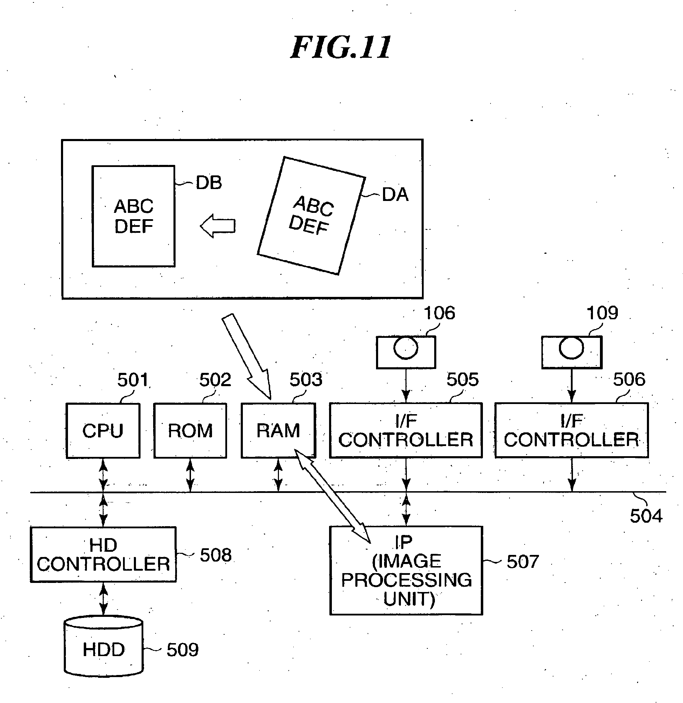

After calculating the skew angle θ of the original 100 by the equation (1), the CPU 501 performs skew correction on the read front-side image data of the original. This skew correction on the read front-side image data of the original is performed by causing the image processing unit 507 to subject the read original image data (see FIG. 10) stored in the RAM 503 to address conversion (see FIG. 11). This front-side skew correction for the original will be described hereafter with reference to FIG. 9.

Now, let it be assumed that the image on the front side (front surface) of the original 100 is read by the front-side reading section 106 and image data DA from the front side is temporarily stored in a writing area of the RAM 503 by the interface controller 505 as illustrated in FIG. 10. Storage addresses (write addresses) at this time are addresses provided without taking the skew of the original 100 into account.

Now, the CPU 501 sets the aforementioned writing area of the RAM 503 where the image data DA has been written and the skew angle e of the original 100, for the image processing unit 507 (S901 in FIG. 9).

Then, the CPU 501 configures various initial settings of the image processing unit 507 so as to correct the inclination of the image due to the skew of the original 100 (which will be hereinafter referred to as "skew correction") (S902 in FIG. 9). Specifically, the CPU 501 defines the following variables (nowStartLineAddr, Addr, pixelCount, and lineCount) and inputs initial values to them:

nowStartLineAddr: address of the RAM 503 from where the leading end of a line is to be read this time Addr: address (data reading position) of the RAM 503 from where data is to be read this time pixelCount: pixel count value in the main scanning direction

lineCount: line count value in the sub scanning direction

The CPU 501 initializes the variable nowStartLineAddr to Reg_StartAddr indicative of a pixel address at the leftmost end of a leading line (a leading row in the main scanning direction) of pixels of the stored image data of the original 100. The CPU 501 initializes the variable Addr as well to Reg_StartAddr, similarly to nowStartLineAddr. It should be noted that in the present embodiment, each pixel of image data is associated with a minimum unit of data storage area, referred to hereinafter, in the RAM 503.

The CPU 501 initializes the variable pixelCount to Reg_Width. The value Reg_Width is a variable representing the length (pixel count) in the width direction of the original 100 corresponding to the main scanning direction. Further, the CPU 501 initializes the variable lineCount to Reg_Line. The value Reg_Line is a variable indicative of the length (pixel count) of the original 100 in the sub scanning direction.

After having initialized each of the variables, the CPU 501 starts the image processing unit 507 (S903). The image processing unit 507 issues a bus read transaction to the RAM 503 to acquire image data stored in the address (Addr) (S904).

Then, to perform skew correction on the read front-side image data, the image processing unit 507 calculates a write address of a pixel of the read front-side image data for writing the same in the RAM 503 (S905). In this case, the image processing unit 507 calculates the write address of the pixel subjected to image rotation processing, using affine transformation.

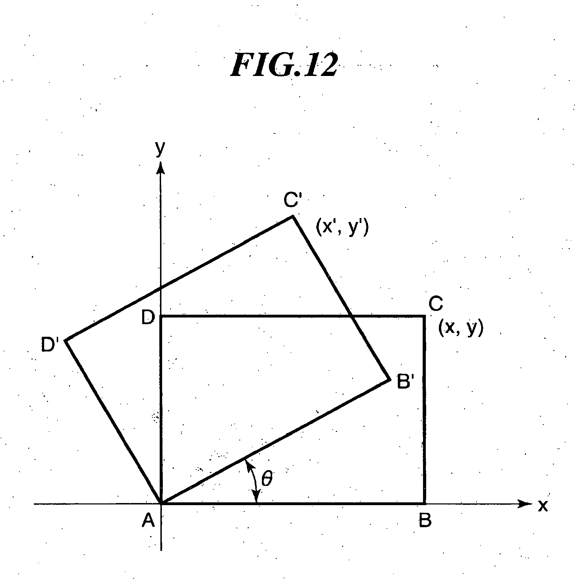

In the image rotation processing performed using affine transformation, e.g. when a rectangle ABCD in FIG. 12 is rotated through a rotational angle e about a point A of the rectangle ABCD, C' coordinates (x', y') of a rectangle A'B'C'D' after the image rotation are represented by the following equations (2-1) and (2-2):

$$X' = x \cdot \cos\theta - y \cdot \sin\theta \ \ldots (2-1)$$

$$y' = x \cdot \sin\theta + y \cdot \cos\theta \ \ldots (2\text{-}2)$$

In the step S905, the image processing unit 507 uses the skew angle of the original 100 calculated in the step S806 in FIG. 8 as the rotational angle θn the equations (2-1) and (2-2), thereby calculating the write address of the pixel after the image rotation processing for skew correction.

Next, the image processing unit 507 issues a bus write transaction to the RAM 503 so as to write image data of the pixel acquired in the step S904 in the calculated write address (address in the RAM 503) (S906) .

Next, the image processing unit 507 decrements the current pixelCount value by 1 (S907) and increments the current Addr value by 1 (S908). Then, the image processing unit 507 determines whether or not the pixelCount value has become equal to 0, i.e. whether skew correction (image rotation processing) on image data of the last pixel on the one line (one row in the main scanning direction) has been completed (S909) .

If the image processing unit 507 determines that the skew correction (image rotation) on the image data of the last pixel on the one line has not been completed, the process returns to the step S904, wherein the image processing unit 507 performs the same skew correction (image rotation) on image data of the next pixel on the same line.

On the other hand, if the pixelCount value has become equal to 0, i.e. if the skew correction (image rotation) on the image data of the last pixel on the one line has been completed, the image processing unit 507 resets the variables so as to perform the same skew correction (image rotation) on the next line.

Specifically, the image processing unit 507 resets the variable Addr to a value obtained by adding the value of Reg_Pitch to the value of nowStartLineAddr (S910). The reset Addr value indicates an address for writing image data of a first pixel on the next line in the RAM 503.

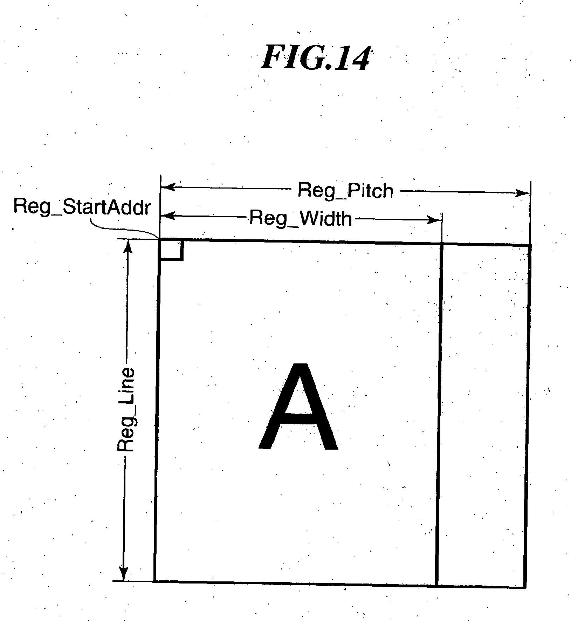

More specifically, as shown in FIG. 14, the added Reg_Pitch value represents the number of pixels per one line in the RAM 503. Therefore, by adding the Reg_Pitch value to the nowStartLineAddr value, the value of the leading address of the next line is input to the variable nowStartLineAddr, whereby a new line of write addresses is started in the RAM 503.

Then, the image processing unit 507 initializes various settings for converting the write address of each pixel of the next line, i.e. for performing skew correction by image rotation (S911). Specifically, the image processing unit 507 adds the Reg_Pitch value to the nowStartLineAddr value.

Further, the image processing unit 507 sets the variable pixelCount to Reg_width to enable reading of a next line of image data. Furthermore, the image processing unit 507 decrements the lineCount value by 1 and sets the variable shakouCount to 1.

Then, the image processing unit 507 determines whether or not the lineCount value has become equal to 0 (S912). If it is determined that the lineCount value has not become equal to 0, which means that skew correction processing by image rotation on all the lines has not been completed, the process returns to the step S904, wherein the image processing unit 507 performs the same skew correction processing on the next line by image rotation.

On the other hand, if the lineCount value has become equal to 0, i.e. if the skew correction by image rotation on all the lines has been completed, the image processing unit 507 terminates the skew correction processing on the front-side image data.

The skew correction processing thus performed corrects the skew of an image of the front-side image data DA inclined due to the skew of the original shown in FIG. 11 and causes the front-side image data DA of the resultant image in a non-skewed state to be written in the RAM 503.

In the skew correction of the front-side image data of the original 100, the front-side image data read by the front-side reading section 106 is temporarily stored in the RAM 503 in the uncorrected state, as described hereinbefore. Then, the skew angle e of the original 100 is calculated based on the size (Reg_Width and Reg_Line) of the original 100, the one-line reading width WD of the original 100 and the conveying distance D, and the image processing unit 507 determines write addresses of the RAM 503 for the front-side image data subjected to the image rotation processing by affine transformation, and writes the image data in the determined write addresses.

On the other hand, in the skew correction of the back-side image data of the original 100, using the size, skew angle e, etc. of the original 100 determined during the skew correction of front-side image data, the back-side image data read by the back-side reading section 109 is directly written in addresses determined by the skew correction (image rotation processing).

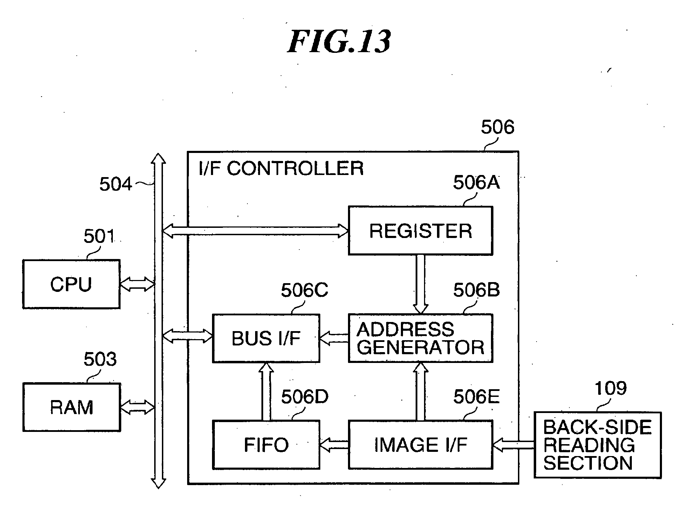

The interface controller 506 is configured as shown in FIG. 13, so as to directly write the back-side image data in the addresses determined by the skew correction (image rotation processing) as mentioned above.

More specifically, as shown in FIG. 13, the interface controller 506 comprises a register 506A, an address generator 506B, a bus interface 506C, a FIFO 506D, and an image interface 506E, and operates under the control of the CPU 501.

The register 506A stores various kinds of setting information for the interface controller 506. Specifically, the CPU 501 sets the size Reg_Width of the original 100 in the main-scanning direction, the size Reg_Pitch of the same including margins in the main-scanning direction, and the size Reg_Line of the same in the sub-scanning direction, as indicated in FIG. 14, in the register 506A. The CPU 501 also sets the address Reg_StartAddr as a starting point for storing back-side image data in the RAM 503, in the register 506A.

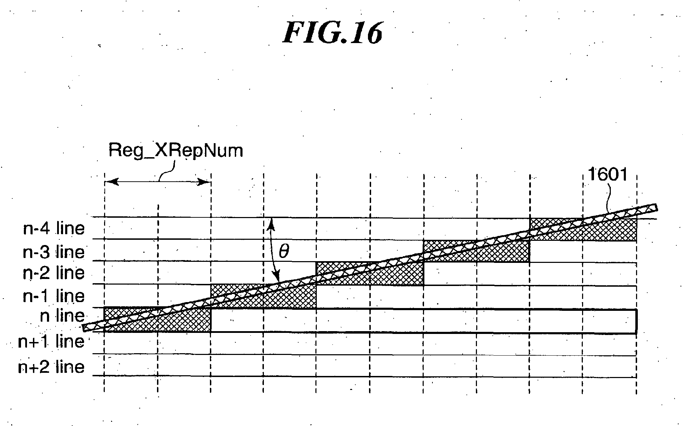

Further, the CPU 501 sets in the register 506A a skew correction unit pixel count Reg_XRepNum as indicated in FIG. 16. Assuming that the skew angle of the original 100 is equal to e, the value of the skew correction unit pixel count Reg_XRepNum can be calculated by the following equation (3):

$$\texttt{Reg\_XRepNum = 1/tan}\theta \quad \ldots (3)$$

The address generator 506B generates address information for writing read image data in the RAM 503, based on the various settings set in the register 506A and various timing signals.

The image interface 506E transfers image data read by the back-side reading section 109 from the back-side of an original 100 to the FIFO 506D and transfers a timing signal to the address generator 506B at the same time.

The FIFO 506D temporarily stores the back-side image data transferred from the image interface 506E, and transfers the image data according to a request signal from the bus interface 506C. The bus interface 506C packs the address information from the address generator 506B and the image data from the FIFO 506D, and issues a write transaction to the RAM 503 via a system bus 404.

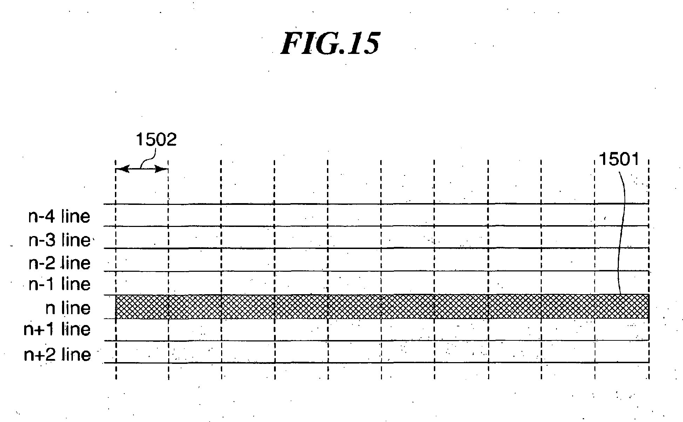

Next, with reference to FIGS. 15 to 17, a description will be given of a write address for directly writing read back-side image data in an address determined by the skew correction (image rotation processing).

Now, it be assumed that a straight line recorded on the back-side of an original 100 in a manner extending parallel with the direction of the width of the original 100 corresponding to the main scanning direction is read by the back-side reading section 109 while the original 100 is being normally conveyed in a non-skewed state. In this case, the straight line recorded on the back-side and extending parallel with the direction of the width thereof is read by the back-side reading section 109, as an image representing a straight line extending parallel with the main scanning direction, as indicated by reference numeral 1501 in FIG. 15, and written in the RAM 503.

It should be noted that reference numeral 1502 in FIG. 15 denotes the minimum unit of data storage area of the RAM 503 used when image data is written therein or read therefrom. In the present embodiment, as mentioned hereinabove, the minimum unit 1502 is associated with a single pixel. However, the minimum unit 1502 may be associated with a set of pixels. In this case, the value of the variable pixelCount is changed depending on the number of pixels constituting the minimum unit.

When the straight line recorded on the back-side of the original 100 in a manner extending parallel with the direction of the width of the original 100 is read in a state where the original 100 is skewed, the straight line is generally written in the RAM 503 as image data of a straight-line like image inclined with respect to the main scanning direction as indicated by reference numeral 1601 in FIG. 16. In the case illustrated in FIG. 16, the image data of the straight line-like image written in the RAM 503 reflects the skew angle θf the original 100 and is also inclined by the angle of θ with respect to the main scanning direction.

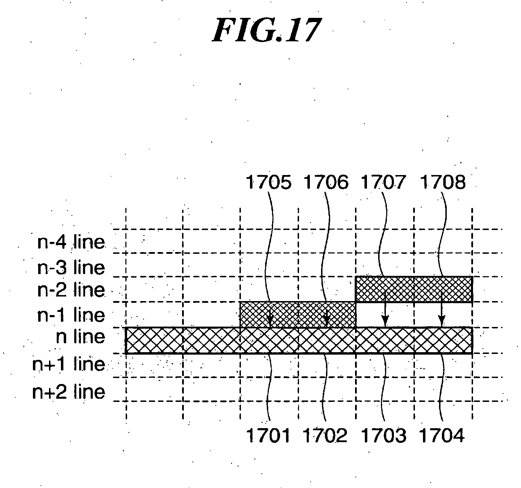

In order to write image data of the straight line on the original 100, which is written in parallel with the direction of the width of the original 100, in the RAM 503, such that an image of the straight line is not inclined with respect to the main scanning direction as shown in FIG. 15, it is required to change the write addresses for writing the image data in the RAM 503, in a manner illustrated in FIG. 17. More specifically, it is required to write respective pieces of image data denoted by reference numerals 1705 and 1706 in respective addresses denoted by reference numerals 1701 and 1702, and write respective pieces of image data denoted by reference numerals 1707 and 1708 in respective addresses denoted by reference numerals 1703 and 1704.

In this case, writing in the RAM 503 is performed on a line-by-line basis, and therefore it is required to generate write addresses for writing pieces of image data of each line in the RAM 503, according to the skew angle θ of the original 100. In the examples shown in FIGS. 16 and 17, it is assumed that the skew correction unit pixel count Reg_XRepNum is twice as large as the number of pixels associated with the minimum unit of data storage area illustrated in FIG. 15, and therefore write addresses are generated in units of pixels twice as large as the number of pixels corresponding to the minimum unit of data storage area.

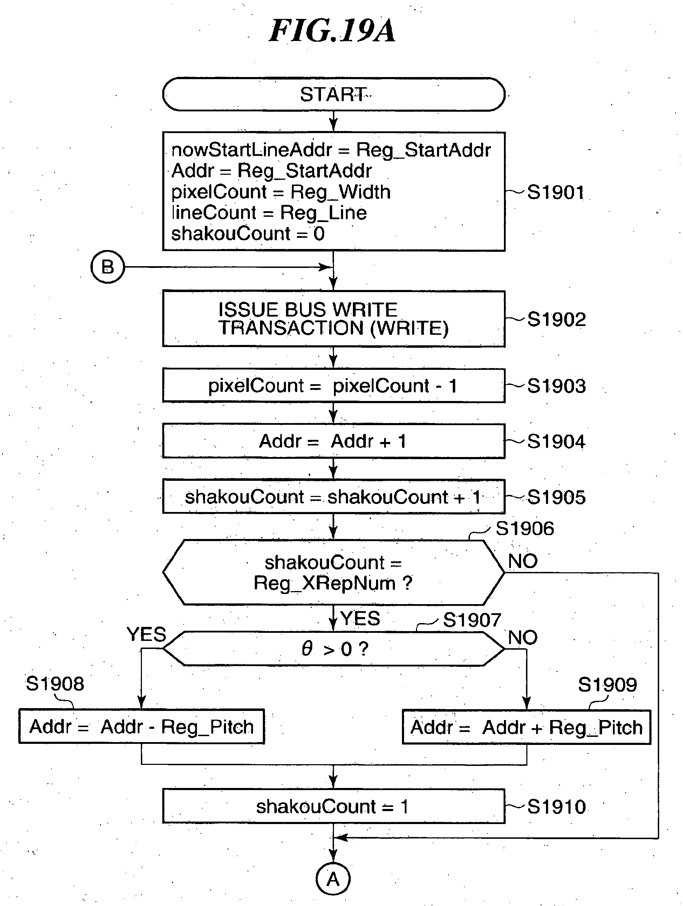

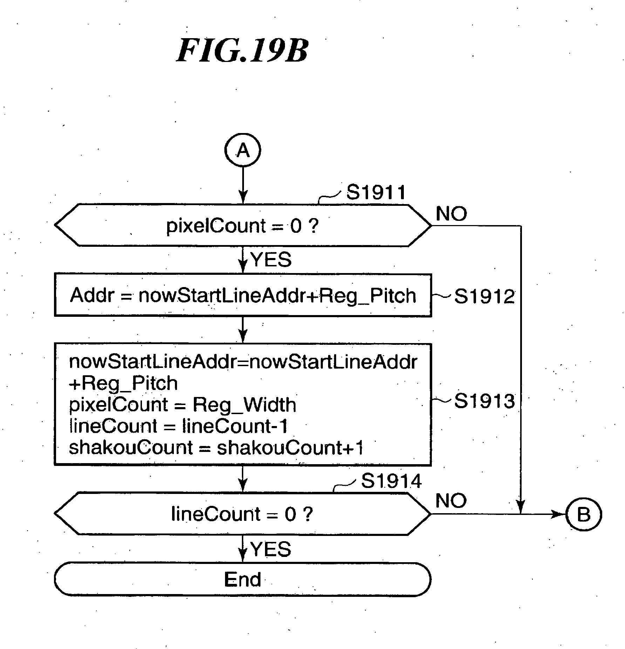

Next, with reference to FIGS. 19A and 19B, a description will be given of a process for correcting the skew of image data read from the back-side of an original, by write address control. It is assumed that the CPU 501 sets the various kinds of information concerning the original 100, shown in FIG. 14, and the skew correction unit pixel count Reg_XRepNum, in advance in the register 506A prior to the start of an operation for reading the original 100.

When the image on the back-side of the original is read by the back-side reading section 109, the CPU 501 initializes the settings which are stored in the register 506A within the interface controller 506 for use by the address generator 506B, as follows (S1901):

```
nowStartLineAddr = Reg_StartAddr
Addr = Reg_StartAddr
pixelCount = Reg_Width
lineCount = Reg_Line
shakouCount = 0
wherein
```

nowStartLineAddr: address of the RAM 503 where the leading end of a line is to be written in this time Addr: address of the RAM 503 where data is to be written this time

pixelCount: pixel count value in the main scanning direction

lineCount: line count value in the sub scanning direction

shakouCount: pixel count value indicative of the number of pixels of the same line in a non-skewed state

Next, the bus interface 506C issues to the RAM 503 via the system bus 504 a write transaction for writing the back-side image data stored in the FIFO 506D, in an address Addr generated by the address generator 506B (S1902).

When the write transaction is terminated, the address generator 506B decrements the pixelCount value by 1 (S1903) and increments the Addr value by 1 (S1904) so as to write data of a next pixel of the back-side image data.

Further, the address generator 506B increments the shakouCount value by 1 (S1905).

Then, the address generator 506B determines whether or not the incremented shakouCount value has reached the Reg_XRepNum value preset in the register 506A (S1906). If it is determined that the incremented shakouCount value has reached the Reg_XRepNum value, the process proceeds to a step S1907. In the steps S1907 et seq., the write addresses of respective next pieces of next back-side image data corresponding in number to the skew correction unit pixel count are updated for skew correction. First, in the step S1907, the address generator 506B determines whether or not the skew angle $\theta$ of the original 100 is positive. The skew angle $\theta$ is determined as positive when a right side edge of the original, as viewed from the line image sensor 301 or 401, passes the line image sensor 301 or 401 earlier than a left side edge thereof. On the other hand, when the left side edge of the original passes the line image sensor 301 or 401 earlier than the right side edge of the same, the skew angle $\theta$ is determined as negative. Further, when the right side edge and left side edge of the original simultaneously pass the line image sensor 301 or 401, it is determined that the skew angle $\theta$ is equal to 0.

If the skew angle $\theta$ of the original 100 is positive, the address generator 506B subtracts the Reg_Pitch value from the current Addr value, and sets a value obtained by the subtraction, as a new Addr value (S1908). If the skew angle $\theta$ of the original 100 is equal to 0 or negative, the address generator 506B adds the Reg_Pitch value to the current Addr value, and sets a value obtained by the addition, as a new Addr value (S1909).

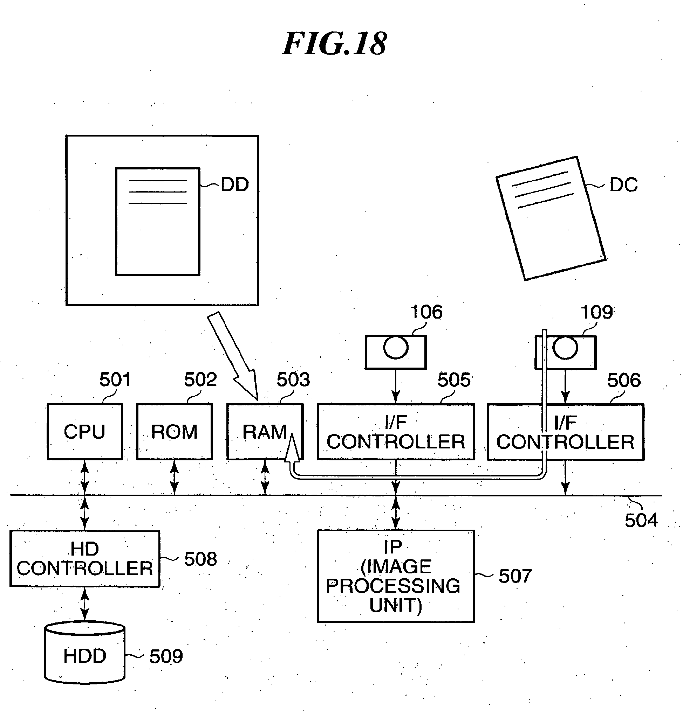

In the present embodiment, it is assumed that the line image sensor 301 of the front-side reading section 106 and the line image sensor 401 of the back-side reading section 109 are arranged parallel to each other. In this case, when the skew angle of the original 100 with respect to the front-side line image sensor 301 is equal to $\theta$, the skew angle of the original 100 with respect to the back-side line image sensor 401 is approximately equal to $\theta$. Therefore, when skew correction for the front surface is performed in a manner illustrated in FIGS. 10 and 11, skew correction for the back-side is performed in a manner illustrated in FIG. 18 where DC is corrected to DD.

By executing the steps S1906 to S1909, image data read from the back-side of the original is written in the RAM 503 in a state subjected to skew correction as shown in FIGS. 17 and 18.

After generating the new Addr in the step S1908 or S1909, the address generator 506B initializes the shakouCount value to 1 (S1910), and then the process proceeds to a step S1911. It should be noted that if the address generator 506B determines that the shakouCount value has not reached the Reg_XRepNum value preset in the register 506A (S1906), the process skips over the steps S1907 to S1910 to the step S1911.

In the step S1911, the address generator 506B determines whether or not the pixelCount value has become equal to 0, i.e. whether or not data of one line of pixels has all been written in the RAM 503. If it is determined that all the data of one line of pixels has not been written in the RAM 503, the process returns to the step S1902, wherein the address generator 506B performs the same write address control for the next pixel of the same line.

On the other hand, if the pixelCount value has become equal to 0, which means that the all the data of one line of pixels has been written in the RAM 503, the address generator 506B resets the various variables so as to perform the same write address control for pixels of the next line.

Specifically, the address generator 506B adds the Reg_Pitch value to the nowStartLineAddr value, and sets a value obtained by the addition, as an Addr value for a first pixel of the next line (S1912). Then, the address generator 506B initializes the various settings for writing data of pixels of the next line in the RAM 503 (S1913).

Specifically, the address generator 506B adds the Reg_Pitch value to the nowStartLineAddr value. Further, the address generator 506B sets pixelCount to Reg_width to enable reading of data of a next one line of pixels. Furthermore, the address generator 506B increments the lineCount value by 1 and sets the shakouCount value to 1.

Then, the address generator 506B determines whether or not the lineCount value has become equal to 0 (S1914). If it is determined that the lineCount value has not become equal to 0, which means that there is at least one line which has not yet been subjected to the process for writing data of pixels thereof in a skew-corrected state into the RAM 503, the process returns to the step S1902.

On the other hand, if the lineCount value has become equal to 0, i.e. if the image data has been written in the RAM 503 in a state where skew correction has been performed on all the lines, the address generator 506B terminates the process for writing back-side image data into the RAM 503 in a state where skew correction has been performed.

As described above, storage addresses for storing image data read from an original by the line image sensor 401 are determined to be respective storage addresses rotated through a skew angle of the original with respect to storage addresses where image data would be stored if the skew of the original detected by the line image sensor 301 were not taken into account.

This address control makes it possible to make use of a skew angle detected by the line image sensor 301 for skew correction of both of front-side image data and back-side image data of the original, whereby the front-side image data and the back-side image data can be corrected without providing separate skew correction circuits for the front surface and the back-side, respectively.

It should be noted that the image data of the original read as described above is written in the RAM 503 and is then stored in the hard disk drive 509. After the skew correction, the image data stored in the hard disk drive 509 may be printed by the printer unit 203 or sent to an external apparatus via a network, not shown. Further, the printing by the printer unit 203 or the transmission through the network may be performed automatically or according to a user instruction.

Aspects of the present invention can also be realized by a computer of a system or apparatus (or devices such as a CPU or MPU) that reads out and executes a program recorded on a memory device to perform the functions of the above-described embodiment, and by a method, the steps of which are performed by a computer of a system or apparatus by, for example, reading out and executing a program recorded on a memory device to perform the functions of the above-described embodiment. For this purpose, the program is provided to the computer for example via a network or from a recording medium of various types serving as the memory device (e.g., computer-readable medium).

While the present invention has been described with reference to an exemplary embodiment, it is to be understood that the invention is not limited to the disclosed exemplary embodiment.

## Claims

1. An image reading device (200) comprising:

   reading means configured to read images from both sides of an original document sheet (100) in a single feeding operation, said reading means including a first reading section (106) configured to read a first image on a first surface of the original document sheet, and a second reading section (109) configured to read a second image on a second surface of the original document sheet;
   detection means configured to detect a skew angle of the original document sheet read by said first reading section (106);
   storage means (503) for storing image data of images read by said reading means; and
   correction means (507) configured to store image data of the first image read by said first reading section in said storage means and then to correct the stored image data of the first image according to the skew angle of the original document sheet detected by said detection means,
   **characterized by** the correction means being further configured to correct image data of the second image read by said second reading section according to the skew angle of the original document sheet detected by said detection means and then to store the corrected image data of the second image in said storage means (106, 501, 503, 507, S901-S912; S1901-S1914).

2. The image reading device according to claim 1, wherein said correction means (507) is arranged to store the image data of the second image read by said second reading section in storage addresses rotated through the skew angle of the original document sheet detected by said detection means with respect to storage addresses where the image data would be stored if a skew of the original document sheet were not taken into account (S1906-S1910).

3. The image reading device according to claim 1, wherein said correction means (507) is arranged to correct the image data of the first image and the image data of the second image by rotating the image data of the first image and the image data of the second image by affine transformation.

4. The image reading device according to claim 1, wherein said first and second reading sections (106, 109) are arranged such that the first reading section (106) reads the first image on the first surface of the original document sheet earlier than said second reading section (109) reads the second image on the second surface of the original document sheet.

5. The image reading device according to claim 1, wherein each of said first reading section (106) and said second reading section (109) is a line sensor.

6. The image reading device according to claim 1, further comprising a storage device (509) configured to store the first image data and the second image data corrected by said correction means, and
a printing unit (203) configured to print the first image data and the second image data stored in said storage device.

7. A method of controlling an image reading device, comprising:

reading a first image on a first surface of an original document sheet (100) by a first reading section (106) and reading a second image on a second surface of the original document sheet by a second reading section (109) in a single feeding operation;
detecting a skew angle of the original document sheet (100) read by the first reading section (106) (S806);
storing image data of the first image read by the first reading section (106) in storage means (503) and then correcting the stored image data of the first image according to the skew angle of the original document sheet detected by said detection step; and
**characterized by**
correcting image data of the second image read by the second reading section (109) according to the detected skew angle of the original document sheet and then storing the corrected image data of the second image in said storage means (S901-S912; S1901-S1914).

8. A computer-executable program for causing a computer to execute a method of controlling an image reading device as claimed in claim 7.

**Patentansprüche**

1. Bildlesevorrichtung (200) umfassend:

eine Leseeinrichtung, die konfiguriert ist, Bilder von beiden Seiten eines Originaldokumentbogens (100) in einem einzigen Zufuhrvorgang zu lesen, wobei die Leseeinrichtung einen ersten Leseabschnitt (106) beinhaltet, der konfiguriert ist, ein erstes Bild auf einer ersten Fläche des Originaldokumentbogens zu lesen, und einen zweiten Leseabschnitt (109), der konfiguriert ist, ein zweites Bild auf einer zweiten Fläche des Originaldokumentbogens zu lesen;
eine Detektionseinrichtung, die konfiguriert ist, einen Schräglaufwinkel des durch den ersten Leseabschnitt (106) gelesenen Originaldokumentbogens zu detektieren;
eine Speichereinrichtung (503) zum Speichern von Bilddaten von durch die Leseeinrichtung gelesenen Bildern; sowie
eine Korrektureinrichtung (507), die konfiguriert ist, Bilddaten des durch den ersten Leseabschnitt gelesenen ersten Bilds in der Speichereinrichtung zu speichern und dann die gespeicherten Bilddaten des ersten Bilds entsprechend dem durch die Detektionseinrichtung detektierten Schräglaufwinkel des Originaldokumentbogens zu korrigieren,
**dadurch gekennzeichnet, dass** die Korrektureinrichtung weiterhin konfiguriert ist, Bilddaten des durch den zweiten Leseabschnitt gelesenen zweiten Bilds entsprechend dem durch die Detektionseinrichtung detektierten Schräglaufwinkel des Originaldokumentbogens zu korrigieren und dann die korrigierten Bilddaten des zweiten Bilds in der Speichereinrichtung zu speichern (106, 501, 503, 507, S901-S912; S1901-S1914).

2. Bildlesevorrichtung nach Anspruch 1, wobei die Korrektureinrichtung (507) ausgebildet ist, die Bilddaten des durch den zweiten Leseabschnitt gelesenen zweiten Bilds in Speicheradressen zu speichern, die um den durch die Detektionseinrichtung detektierten Schräglaufwinkel des Originaldokumentbogens rotiert sind bezüglich Speicheradressen, wo die Bilddaten gespeichert werden würden, wenn ein Schräglauf des Originaldokumentbogens nicht berücksichtigt werden würde (S1906-S1910).

3. Bildlesevorrichtung nach Anspruch 1, wobei die Korrektureinrichtung (507) ausgebildet ist, die Bilddaten des ersten Bilds und die Bilddaten des zweiten Bilds durch Rotieren der Bilddaten des ersten Bilds und der Bilddaten des zweiten Bilds durch eine affine Abbildung zu korrigieren.

4. Bildlesevorrichtung nach Anspruch 1, wobei der erste und zweite Leseabschnitt (106, 109) derart ausgebildet sind, dass der erste Leseabschnitt (106) das erste Bild auf der ersten Fläche des Originaldokumentbogens früher liest als der zweite Leseabschnitt (109) das zweite Bild auf der zweiten Fläche des Originaldokumentbogens liest.

5. Bildlesevorrichtung nach Anspruch 1, wobei jeder aus dem ersten Leseabschnitt (106) und dem zweiten Leseabschnitt (109) ein Zeilensensor ist.

6. Bildlesevorrichtung nach Anspruch 1, weiterhin umfassend eine Speichervorrichtung (509), die konfiguriert ist, die durch die Korrektureinrichtung korrigierten ersten Bilddaten und zweiten Bilddaten zu speichern, sowie
   eine Druckeinheit (203), die konfiguriert ist, die in der Speichervorrichtung gespeicherten ersten Bilddaten und zweiten Bilddaten zu drucken.

7. Verfahren zum Steuern einer Bildlesevorrichtung, umfassend:

   Lesen eines ersten Bilds auf einer ersten Fläche eines Originaldokumentbogens (100) durch einen ersten Leseabschnitt (106) und Lesen eines zweiten Bilds auf einer zweiten Fläche des Originaldokumentbogens durch einen zweiten Leseabschnitt (109) in einem einzigen Zufuhrvorgang;
   Detektieren eines Schräglaufwinkels des durch den ersten Leseabschnitt (106) gelesenen Originaldokumentbogens (100) (S806); sowie
   Speichern von Bilddaten des durch den ersten Leseabschnitt (106) gelesenen ersten Bilds in einer Speichereinrichtung (503) und dann Korrigieren der gespeicherten Bilddaten des ersten Bilds entsprechend dem durch den Detektionsschritt detektierten Schräglaufwinkel des Originaldokumentbogens;
   **gekennzeichnet durch**
   Korrigieren von Bilddaten des **durch** den zweiten Leseabschnitt (109) gelesenen zweiten Bilds entsprechend dem detektierten Schräglaufwinkel des Originaldokumentbogens und dann Speichern der korrigierten Bilddaten des zweiten Bilds in der Speichereinrichtung (S901-S912; S1901-S1914).

8. Computerausführbares Programm zum Veranlassen eines Computers, ein wie in Anspruch 7 beanspruchtes Verfahren zum Steuern einer Bildlesevorrichtung auszuführen.

## Revendications

1. Dispositif (200) de lecture d'images comprenant :

   un moyen de lecture constitué pour lire des images à partir des deux côtés d'une feuille (100) de document original en une seule opération de défilement, ledit moyen de lecture incluant une première section (106) de lecture constituée pour lire une première image sur une première face de la feuille de document original, et une seconde section (109) de lecture constituée pour lire une seconde image sur la seconde face de la feuille de document original ;
   un moyen de détection constitué pour détecter un angle de biais de la feuille de document original lue par ladite première section (106) de lecture ;
   un moyen (503) de mémorisation destiné à mémoriser les données d'image des images lues par ledit moyen de lecture ; et
   un moyen (507) de correction constitué pour mémoriser, dans ledit moyen de mémorisation, les données d'image de la première image lue par ladite première section de lecture et pour corriger ensuite les données d'image mémorisées de la première image en fonction de l'angle de biais de la feuille de document original détecté par ledit moyen de détection,
   **caractérisé en ce que** le moyen de correction est en outre constitué pour corriger les données d'image de la seconde image lue par ladite seconde section de lecture en fonction de l'angle de biais de la feuille de document original détecté par ledit moyen de détection et pour mémoriser ensuite, dans ledit moyen de mémorisation (106, 501, 503, 507, S901 à S912 ; S1901 à S1914), les données d'image corrigées de la seconde image.

2. Dispositif de lecture d'images selon la revendication 1, dans lequel ledit moyen (507) de correction est agencé pour mémoriser (S1906 à S1910) les données d'image de la seconde image lue par ladite seconde section de lecture à des adresses de mémoire ayant subi une rotation de l'angle de biais de la feuille de document original détecté par ledit moyen de détection par rapport aux adresses de mémoire où les données d'image seraient mémorisées si l'on ne tenait pas compte du biais de la feuille de document original.

3. Dispositif de lecture d'images selon la revendication 1, dans lequel ledit moyen (507) de correction est agencé pour corriger les données d'image de la première image et les données d'image de la seconde image en faisant tourner les données d'image de la première image et les données d'image de la seconde image à l'aide d'une transformation affine.

4. Dispositif de lecture d'images selon la revendication 1, dans lequel lesdites première et seconde sections (106, 109) de lecture sont agencées de façon que la première section (106) de lecture lise la première image sur la première face de la feuille de document original plus tôt que ladite seconde section (109) de lecture ne lit la seconde image sur la seconde face de la feuille de document original.

5. Dispositif de lecture d'images selon la revendication 1, dans lequel chacune de ladite première section (106) de lecture et de ladite seconde section (109) de lecture est un capteur de ligne.

6. Dispositif de lecture d'images selon la revendication 1, comprenant en outre un dispositif (509) de mémorisation constitué pour mémoriser les premières données d'image et les secondes données d'image corrigées par ledit moyen de correction ; et
une unité (203) d'impression constituée pour imprimer les premières données d'image et les secondes données d'image mémorisées dans ledit dispositif de mémorisation.

7. Procédé de commande d'un dispositif de lecture d'images, comprenant :

la lecture, en une seule opération de défilement, d'une première image sur une première face d'une feuille (100) de document original à l'aide d'une première section (106) de lecture et la lecture d'une seconde image sur la seconde face de la feuille de document original à l'aide d'une seconde section (109) de lecture ;
la détection (S806) d'un angle de biais de la feuille de document original (100) lue par la première section (106) de lecture ;
la mémorisation, dans un moyen (503) de mémorisation, des données d'image de la première image lue par la première section (106) de lecture et la correction ensuite des données d'image mémorisées de la première image en fonction de l'angle de biais de la feuille de document original détecté par ladite étape de détection, et **caractérisé par** la correction des données d'image de la seconde image lue par la seconde section (109) de lecture en fonction de l'angle de biais détecté de la feuille de document original et la mémorisation ensuite (S901 à S912 ; S1901 à S1914), dans ledit moyen de mémorisation, des données d'image corrigées de la seconde image.

8. Programme exécutable informatiquement pour faire qu'un processeur mette en oeuvre un procédé selon la revendication 7 de commande d'un dispositif de lecture d'images.

# FIG.1

# FIG.2

# FIG.3

# FIG.4

# FIG.5

# FIG.6

# FIG.7

# FIG.8

```
                    ┌─────────────────────────────┐
                    │           START             │
                    └─────────────┬───────────────┘
                                  │
        ┌──────────────┐          ▼
        │              ◄──────────┐
   ┌────┴──┐   ╱─────────────────────────────╲        S801
   │  NO   │  ╱    LEADING EDGE OF             ╲
   └───────┘  ╲    ONE SIDE DETECTED ?         ╱
               ╲─────────────────────────────╱
                          │ YES
                          ▼
             ┌─────────────────────────────┐
             │        START TIMER          │ ~S802
             └─────────────┬───────────────┘
                           │
        ┌──────────────┐   ▼
        │              ◄───┐
   ┌────┴──┐   ╱─────────────────────────────╲        S803
   │  NO   │  ╱    LEADING EDGE OF THE         ╲
   └───────┘  ╲    OTHER SIDE DETECTED ?       ╱
               ╲─────────────────────────────╱
                          │ YES
                          ▼
             ┌─────────────────────────────┐
             │        STOP TIMER           │ ~S804
             └─────────────┬───────────────┘
                           ▼
             ┌─────────────────────────────┐
             │  CALCULATE CONVEYING        │ ~S805
             │  DISTANCE OF ORIGINAL       │
             └─────────────┬───────────────┘
                           ▼
             ┌─────────────────────────────┐
             │  CALCULATE SKEW ANGLE       │ ~S806
             └─────────────┬───────────────┘
                           ▼
             ┌─────────────────────────────┐
             │           END               │
             └─────────────────────────────┘
```

**FIG.9**

```
                    ┌─────────────────────────────┐
                    │            START            │
                    └─────────────────────────────┘
                                   │
                    ┌─────────────────────────────┐
                    │  CONFIGURE SETTINGS FOR IP  │──S901
                    └─────────────────────────────┘
                                   │
                    ┌─────────────────────────────┐
                    │ nowStartLineAddr = Reg_StartAddr │
                    │ Addr = Reg_StartAddr        │──S902
                    │ pixelCount = Reg_Width      │
                    │ lineCount = Reg_Line        │
                    └─────────────────────────────┘
                                   │
                    ┌─────────────────────────────┐
                    │          START IP           │──S903
                    └─────────────────────────────┘
                                   │
                    ┌─────────────────────────────┐
                    │      ISSUE BUS READ         │──S904
                    │   TRANSACTION (READ)        │
                    └─────────────────────────────┘
                                   │
                    ┌─────────────────────────────┐
                    │   CALCULATE WRITE ADDRESS   │──S905
                    └─────────────────────────────┘
                                   │
                    ┌─────────────────────────────┐
                    │      ISSUE BUS WRITE        │──S906
                    │   TRANSACTION (WRITE)       │
                    └─────────────────────────────┘
                                   │
                    ┌─────────────────────────────┐
                    │  pixelCount = pixelCount - 1 │──S907
                    └─────────────────────────────┘
                                   │
                    ┌─────────────────────────────┐
                    │       Addr = Addr + 1       │──S908
                    └─────────────────────────────┘
                                   │
              NO   ╱─────────────────────────────╲  S909
            ◄──────    pixelCount = 0 ?           
                      ╲─────────────────────────────╱
                                   │ YES
                    ┌─────────────────────────────┐
                    │ Addr=nowStartLineAddr+Reg_pitch │──S910
                    └─────────────────────────────┘
                                   │
                    ┌─────────────────────────────┐
                    │ nowStartLineAddr =          │
                    │ nowStartLineAddr + Reg_Pitch │
                    │ pixelCount = Reg_Width      │──S911
                    │ lineCount = lineCount - 1   │
                    │ shakouCount = 1             │
                    └─────────────────────────────┘
                                   │
              NO   ╱─────────────────────────────╲  S912
            ◄──────     lineCount = 0 ?           
                      ╲─────────────────────────────╱
                                   │ YES
                    ┌─────────────────────────────┐
                    │            END              │
                    └─────────────────────────────┘
```

# *FIG.10*

DA

ABC
DEF

ABC
DEF ~100

106

109

501      502      503                    505              506

| CPU | ROM | RAM | I/F CONTROLLER | I/F CONTROLLER |

504

HD CONTROLLER ~ 508

IP (IMAGE PROCESSING UNIT) ~ 507

HDD ~ 509

# FIG.11

# FIG.12

# FIG.13

506

I/F CONTROLLER

504

501

CPU

503

RAM

506A

REGISTER

506C

506B

BUS I/F ← ADDRESS GENERATOR

506D

506E

FIFO ← IMAGE I/F

109

BACK-SIDE READING SECTION

# FIG.14

# *FIG.15*

# FIG.16

# FIG.17

# FIG.18

DD

DC

106

109

501     502     503     505     506

| CPU | ROM | RAM | I/F CONTROLLER | I/F CONTROLLER |

504

| HD CONTROLLER |     508

| IP (IMAGE PROCESSING UNIT) |     507

HDD     509

# FIG.19A

START

nowStartLineAddr = Reg_StartAddr
Addr = Reg_StartAddr
pixelCount = Reg_Width
lineCount = Reg_Line
shakouCount = 0 — S1901

(B) →

ISSUE BUS WRITE
TRANSACTION (WRITE) — S1902

pixelCount = pixelCount - 1 — S1903

Addr = Addr + 1 — S1904

shakouCount = shakouCount + 1 — S1905

S1906

shakouCount =
Reg_XRepNum ? — NO

YES — S1907

θ > 0 ? — NO

YES

S1908

Addr = Addr - Reg_Pitch

S1909

Addr = Addr + Reg_Pitch

shakouCount = 1 — S1910

(A)

## FIG.19B

(A)

S1911

⟨ pixelCount = 0 ? ⟩ — NO

↓YES

Addr = nowStartLineAddr+Reg_Pitch — S1912

nowStartLineAddr=nowStartLineAddr
+Reg_Pitch
pixelCount = Reg_Width — S1913
lineCount = lineCount-1
shakouCount = shakouCount+1

S1914

⟨ lineCount = 0 ? ⟩ — NO → (B)

↓YES

End

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004254166 A

- JP 2007019854 A